# EUROPEAN PATENT APPLICATION

(11) **EP 4 180 263 A1**
(43) Date of publication of application: **17.05.2023**
(21) Application number: 22166987.2
(22) Date of filing: 06.04.2022
(51) Int. Cl.: B60L 50/62, B60L 53/16, B60L 53/30, B60L 53/80, B60L 58/21

(54) **RANGE EXTENSION SYSTEM OF ELECTRIC ENERGY STORAGE AND SUPPLY DEVICES FOR ELECTRIC OR HYBRID VEHICLES**

(30) Priority: 10.11.2021 PT 2021117569
(71) Applicant: Instituto Politécnico De Leiria, 2411-901 Leiria (PT)
(72) Inventor: HENRIQUES FERREIRA, CARLOS DANIEL, 2410-377 LEIRIA (PT); VENTURA SERRANO, LUIS MANUEL, 3150-129 CONDEIXA-A-NOVA (PT); DURO DA COSTA, DIOGO, 2415-017 FIGUEIRAS (PT)
(74) Representative: Monteiro Alves, Inês

(57) **Abstract**

The system comprises, preferably, an external range extension subsystem (1) with a range extension battery (5), a high to low voltage converter (32), a pre-charge resistor (19), power contactors (16,17,18) connected to the first range extension control subsystem (6), a first electrical supply line for contactors (23) and a control connections (24,25,26); and an onboard range extension subsystem (2) with a power distribution module (100), power contactors (20,21,22) linked by an electrical supply line (27) and control connections (28,29,30) to a second range extension control subsystem (7) with a digital communications bus of the vehicle (31); connectable by high voltage connection (8,9,10,11) and electrical contact check connections (12,13), electrical connection elements (3,4) and digital communications bus (14,15). The system allows the immediate use of the electric energy available in the range extension batteries.

## Description

### TECHNICAL FIELD

The present invention refers to a portable electric energy recharge system to extend the electric energy storage and supply devices autonomy for electric or hybrid vehicles.

### BACKGROUND ART

One of the problems associated with electric vehicles is their electric batteries reduced autonomy. The storage management and electric power availability is more complex and unpredictable in this type of vehicles.

Several factors, such as outside temperature, vehicle load, acceleration and active devices while driving, result in battery degradation over time, deviations in the expected energy consumption and batteries accelerated discharge.

The combination of these factors and/or the driver's lack of attention to the best battery management can lead to the early discharge of electric or hybrid vehicle batteries, with the consequent vehicle immobilization and need for recharging or combustion engine activation in the case of hybrid vehicles.

### Technical Problem

Recharging of electric vehicles lacks mobility in situations where the vehicle immobilization occurs, as it may be necessary to tow the vehicle to a recharging station or to carry recharging equipment including batteries close to the vehicle to recharge it. However, such recharging processes are slow and do not allow instantaneous use of the vehicle.

Other systems, such as battery trailers, allow the extended autonomy of the vehicle. An example of this type of recharging system has been developed by the company EP Tender, as revealed at https://www.caradvice.com.au/832274/range-extender-trailer/. On the other hand, their use requires these systems to be constantly installed in the vehicle due to their recharging process. Although the systems allow the immediate use of the spare energy provided by the range extender, they have a slow recharging process, since these systems use a vehicle's charging plug.

The prior art presents other options concerning portable recharging modules, which can be carried along with the vehicle. An example of such modules is the portable charging unit "SparckCharge", developed by the company of the same name, where the said device was referred on 7 August 2019 in the e-magazine https://chargedevs.com/features/sparkcharge-launches-a-portable-and-scalable-dc-fast-charging-unit/.

The portable "SparckCharge" charging unit also uses the vehicle's charging plug and, therefore, instantaneous use of the vehicle is not possible as soon as it is connected to the charging system.

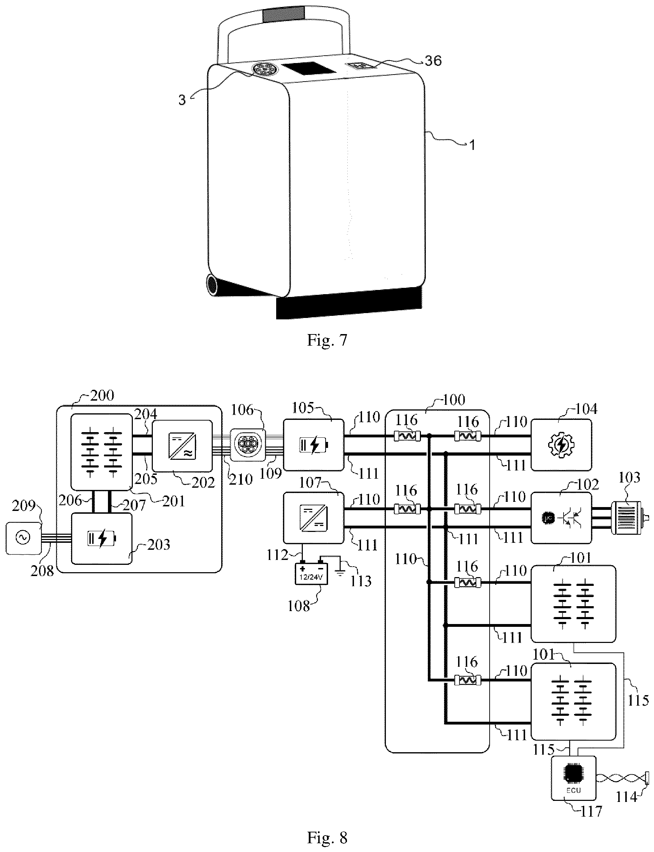

Figure 8 illustrates an example for a range extension module of the prior at(200) which connects to a charge socket outlet of the vehicle (106) through an alternate voltage connection (210). Said range extension module (200) comprises a high voltage battery (201), a converter between direct and alternating voltage (202) and a charger (203), wherein said high voltage battery (201) and the converter between direct and alternating voltage (202) are connected through a positive high voltage connection (204) and a negative high voltage connection (205), and wherein said high voltage battery (201) and charger (203) are connected through a positive high voltage connection (206) and a negative high voltage connection (207). The range extension module (200) is recharged from a supply of alternating voltage (209) through an alternating voltage connection (208), which connects to the charger (203), and converts the alternating voltage to direct voltage so that the high voltage battery (201) charging occurs. This prior art range extension system has the limitation arising from the fact that the energy stored in the high voltage battery (201) must be converted in the converter between direct and alternating current (202) and converted again from alternating voltage to direct current in a high-voltage charger of the vehicle (105), resulting in a lower efficiency of electric energy transfer.

In addition, the greater connection in terms of electrical cable length also increases energy losses and causes delays in the recharging process, also causing an energy time limit for charging the vehicle's high-voltage batteries.

Furthermore, in case of failure of the vehicle's high-voltage batteries, the range extension station does not allow the vehicle to operate.

An additional limitation common to these solutions reported in prior art, refers to energy losses from the charging modes and devices used.

### Solution to Problem

The range extension system for electric energy storage and supply devices for electric or hybrid vehicles solves the problems referred in the prior art by incorporating in said system a set of electrical connections used for the vehicle's high voltage bus and consequently to the vehicle's high voltage power distribution module, to allow the immediate use of the electrical energy available in the vehicle's range extension batteries.

The system of the present invention incorporates electrical connection detection elements of the range extension system with the high voltage bus and detection elements of the batteries disconnection onboard the vehicle. The disconnection of the batteries onboard the vehicle is necessary for the proper activation of electrical energy supply stored in the range extension batteries, in view of the existing voltage differences between the range extension batteries and the batteries onboard the vehicle.

### Advantageous Effects of Invention

Within this framework of problems stated in the prior art, the present invention refers to a system for range extension of storage devices and electric power supply for electric or hybrid vehicles that allows instant and immediate use of the vehicle after its installation and activation. The system of range extension allows its realization in dimensions and weight that enable its easy transport and installation in the vehicle, for example in its trunk, as can be observed in the implementation method illustrated in Figure 7.

Furthermore, the present invention enables the instantaneous use of the total energy available in the range extension batteries, which can be used as emergency batteries. In this way, the vehicle can be used immediately after connection to the system of the present invention.

The range extension system for storage devices and electric power supply for electric or hybrid vehicles also comprises a pre-charging circuit, which is configured to allow adaptation between the voltage of the range extension batteries and the voltage of the vehicle's high voltage bus.

Therefore, the energy stored in the range extension batteries can be used directly by the devices of the vehicle, including the electric traction motor, excluding the necessity to convert energy from direct current (DC) to alternating current (AC) by an inverter and from alternating current (AC) to direct current (DC) by an onboard charger. In this way, present invention system promotes with the reduction of electric power transfer losses, increasing the energy efficiency of the range extension system.

### Brief Description of Drawings

With the purpose of providing an understanding of the principles according to the embodiments of the present invention, reference will be made to the embodiments illustrated in the figures and to the terminology used to describe them. In any case, it must be understood that there is no intention of limiting the scope of the present invention to the content of the figures. Any subsequent alterations or modifications of the inventive characteristics shown herein, as well as any additional applications of the principles and embodiments of the invention shown, which would occur normally to a person skilled in the art having this description in hands, are considered as being within the scope of the claimed invention.
Figure 1 - illustrates the range extension system of storage and power supply devices with the external range extension subsystem and the onboard range extension subsystem disconnected;
Figure 2 - illustrates the range extension system of storage and power supply devices with the external range extension subsystem and the onboard range extension subsystem connected;
Figure 3 - illustrates a first version of a range extension battery charging subsystem;
Figure 4 - illustrates a second version of a range extension battery charging subsystem;
Figure 5 - illustrates a version of a first range extension control subsystem;
Figure 6 - illustrates a version of a power distribution module and its connection with an onboard range extension subsystem and other subsystems of a vehicle;
Figure 7 - illustrates a device including an external range extension subsystem and a first electrical connection element;
Figure 8 - illustrates a prior art range extension system.

### DESCRIPTION OF EMBODIMENTS

The present invention refers to a range extension system of electric energy storage and supply devices for electric or hybrid vehicles comprising:
an onboard range extension subsystem (2) which includes a power distribution module (100) and a second range extension control subsystem (7); and
a first electrical connection element (3), which includes a first positive high voltage connection (8), a first negative high voltage connection (9), a first electrical contact check connection (12) and a first digital communications bus (14); and
a second electrical connection element (4), which includes a second positive high voltage connection (10), a second negative high voltage connection (11), a second electrical contact check connection (13) and a second digital communications bus (15); wherein
the external range extension subsystem (1) is configured to connect to the onboard range extension subsystem (2) through the connection of the first electrical connection element (3) with the second electrical connection element (4), and said connection is established through contact between the first positive high voltage connection (8) and the second positive high voltage connection (10), between the first negative high voltage connection (9) and the second negative high voltage connection (11), between the first electrical contact check connection (12) and the second electrical contact check connection (13) and between the first digital communications bus (14) and the second digital communications bus (15); and wherein
the first positive high voltage connection (8) and the first negative high voltage connection (9) are additionally linked to at least one range extension battery (5), and the first positive high voltage connection (8) is contacted to a first power contactor for pre-charge (16) and to a first power contactor for positive high voltage (17) and the first negative high voltage connection (9) is contacted to a first power contactor for negative high voltage (18); and wherein
the first electrical contact check connection (12) and the first digital communications bus (14) are additionally contacted to the first range extension control subsystem (6); and wherein
the second positive high voltage connection (10) and the second negative high voltage connection (11) are additionally contacted to the power distribution module (100), and the second positive high voltage connection (10) is contacted to a second power contactor for pre-charge (20) and to a second power contactor for positive high voltage (21) and the second negative high voltage connection (11) is contacted to a second power contactor for negative high voltage (22); and wherein
the second electrical contact check connection (13) and the second digital communications bus (15) are additionally contacted to the second range extension control subsystem (7).

In preferred embodiments of the present invention, the external range extension subsystem (1) or the onboard rage extension subsystem (2) include at least one contactor selected from the group consisting of a power contactor for pre-charging and a power contactor for high positive voltage.
Additionally, the external range extension subsystem (1) or the onboard range extension subsystem (2) includes at least one pre-charge resistor to ensure adaptation between the voltages observed in the operation of the range extension system of the present invention and the voltages appropriate to the operation of the vehicle modules.

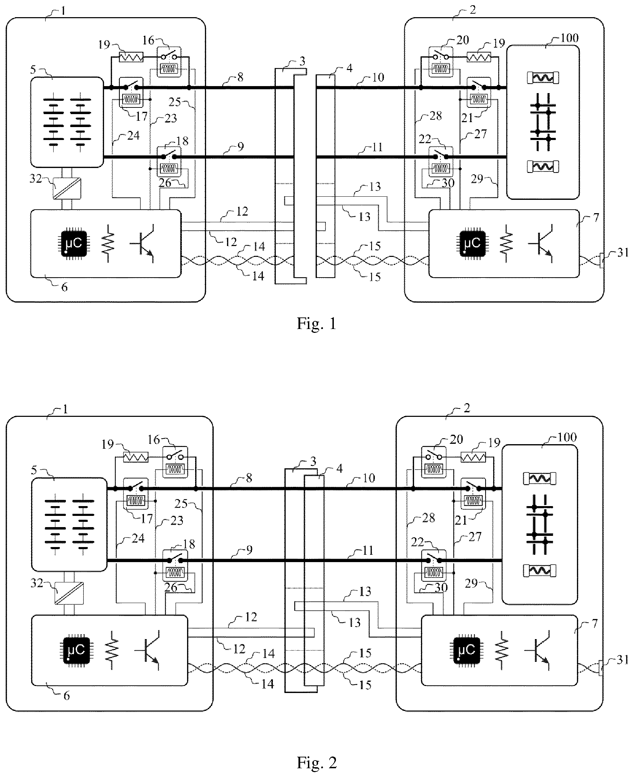

In the preferred embodiments of the range extension system of electric energy storage and supply devices for electric or hybrid vehicles, as illustrated in figures 1 and 2, in the external range extension subsystem (1), the first positive high voltage connection (8) includes the first power contactor for pre-charge (16), the first power contactor for positive high voltage (17) and a first pre-charge resistor (19), which are arranged between the range extension battery (5) and the first electrical connection element (3); wherein
the first power contactor for pre-charge (16) and the first pre-charge resistor (19) are arranged in series with each other and in parallel in relation to the first power contactor for positive high voltage (17); and wherein
the first power contactor for pre-charge (16) and the first power contactor for positive high voltage (17) are electrically powered from the first range extension control subsystem (6) through a first electrical supply line for contactors (23); and wherein
the first power contactor for positive high voltage (17) is controlled by the first range extension control subsystem (6) through a first control connection (24); and wherein
the first power contactor for pre-charge (16) is controlled by the first range extension control subsystem (6) through a second control connection (25).

In other particularly preferred embodiments, as illustrated in figures 1 and 2, in the external range extension subsystem (1), the first negative high voltage connection (9) includes the first power contactor for negative high voltage (18), which is arranged between the range extension battery (5) and the first electrical connection element (3); wherein
the first power contactor for negative high voltage (18) is electrically powered from the first range extension control subsystem (6) through a first electrical supply line for contactors (23); and wherein
the first power contactor for negative high voltage (18) is controlled by the first range extension control subsystem (6) through a third control connection (26).

In other preferred embodiments of the range extension system of electric energy storage and supply devices for electric or hybrid vehicles, as illustrated in figures 1 and 2, in the onboard range extension subsystem (2), the second positive high voltage connection (10) includes the second power contactor for pre-charge (20), the second power contactor for positive high voltage (21) and a second pre-charge resistor (19), which are arranged between the power distribution module (100) and the second electrical connection element (4); wherein
the second power contactor for pre-charge (20) and the second pre-charge resistor (19) are arranged in series with each other and in parallel in relation to the second power contactor for positive high voltage (21); and wherein
the second power contactor for pre-charge (20) and the second power contactor for positive high voltage (21) are electrically powered from the second range extension control subsystem (7) through a second electrical supply line for contactors (27); and wherein the second power contactor for positive high voltage (21) is controlled by the second range extension control subsystem (7) through a fourth control connection (29); and wherein the second power contactor for pre-charge (20) is controlled by the second range extension control subsystem (7) through a fifth control connection (28).

Even more preferably, as illustrated in figures 1 and 2, in the onboard range extension subsystem (2), the second negative high voltage connection (11) includes the second power contactor for negative high voltage (22), which is arranged between the power distribution module (100) and the second electrical connection element (4); wherein
the second power contactor for negative high voltage (22) is electrically powered from the second range extension control subsystem (7) through a second electrical supply line for contactors (27); and wherein
the second power contactor for negative high voltage (22) is controlled by the second range extension control subsystem (7) through a sixth control connection (30).

In particularly preferred embodiments of the system according to the invention, as illustrated in Figure 1, a first positive high voltage connection (8) includes a first power contactor for pre-charge (16), a first power contactor for positive high voltage (17) and a first pre-charge resistor (19), and the first negative high voltage connection (9) includes a first power contactor for negative high voltage (18), which are arrange between a range extension battery (5) and a first electrical connection element (3).

In addition, a second positive high voltage connection (10) includes a second power contactor for pre-charge (20), a second power contactor for positive high voltage (21) a second pre-charge resistor (19) and the second negative high voltage connection (11) includes a second power contactor for negative high voltage (22), which are arranged between the power distribution module (100) and the second electrical connection element (4). Said power contactor for positive high voltage (17 and 21) are configured to ensure the isolation of high voltage connections, plugs and exposed components of the range extension system, and promote progressive connection after the voltage balance between the system components and the vehicle is reached. The gradual connection initially occurs with the activation of the power contactors for negative high voltage (18 e 22) and the power contactors for pre-charge (16 e 20). This way, the pre-charge resistors (19) limit the current in the circuit due to voltage differences between the high voltage bus of the range extender, namely between the first positive high voltage connection (8) and the first negative high voltage connection (9) and the second positive high voltage connection (10) and the second negative high voltage connection (11), protecting components and contacts. Then, the high voltage voltages will tend towards near values and at that instant it will be possible to establish the connection between the high voltage bus, by activating the power contactors for positive high voltage (17 and 21), safely.

As illustrated in figure 2, the first electrical connection element (3) and the second electrical connection element (4) are detected by the first range extension control subsystem (6) and by the second range extension control subsystem (7), when the circuit closing on the first electrical contact check connection (12) and second electrical contact check connection (13) occurs. After digital communication between the first digital communications bus (14) and the second digital communications bus (15) and the connection between the external range extension subsystem (1) and the onboard range extension (2), the second range extension control subsystem (7) disables the vehicle's high-voltage batteries by communicating with the battery management unit through a digital communications bus of the vehicle (31). In the particularly preferred embodiments, then, through activation of the a first power contactor for negative high voltage (18), a second power contactor for negative high voltage (22), a first power contactor for positive high voltage (17) and a second power contactor for positive high voltage (21), the voltage balance is established between the voltage of the range extension battery (5) and the high-voltage components in the vehicle.

In this way, the system of the present invention provides advantages related to an immediate availability stored energy in the range extension battery (5), while it is possible the immediate use of the vehicle, even with the batteries of the vehicle discharged. This provides a faster and more efficient recharging process, and it is also possible to extend the vehicle's range, whereby the range extension battery (5) can operate in parallel with the vehicle's high-voltage batteries.

In other embodiments, the system of the present invention comprises a high to low voltage converter (32), which is linked to at least one range extension battery (5) and to the first range extension control subsystem (6), and is configured to provide the electrical supply to low voltage devices.

As illustrated in figures 1 and 2, the second range extension control subsystem (7) is contacted to a digital communications bus of the vehicle (31).

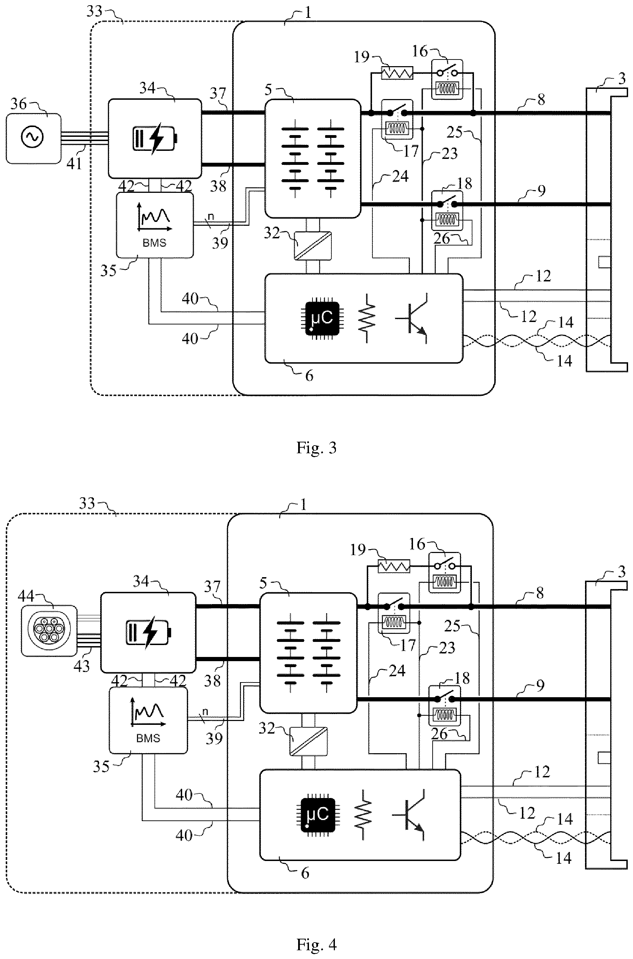

As illustrated in figures 3 and 4, the system of the present invention comprises a range extension battery loading subsystem (33), which includes a first alternating-to-direct voltage converter (34) and a first battery monitoring and balancing subsystem (35); wherein said first alternating-to-direct voltage converter (34) is configured to connect to at least one range extension battery (5) through a third positive high voltage connection (37) and a third negative high voltage connection (38); and wherein
said first alternating-to-direct voltage converter (34) is configured to connect to an alternating voltage socket outlet (36), through a first alternating voltage connection (41), or with an electric or hybrid vehicle recharge station (44), through a second alternating voltage connection (43); and wherein
said first battery monitoring and balancing subsystem (35) is configured to connect to at least one range extension battery (5) through a connection (39), to the first range extension control subsystem (6) through a first digital communication (40) and to the first alternating-to-direct voltage converter (34) through a second digital communication (42).

The range extension battery loading subsystem (33) can be configured with the possibility of connecting and disconnecting or coupling and uncoupling the range extension system of storage devices and electric power supply for electric or hybrid vehicles with an alternating voltage socket outlet (36), in addition to being configured to manage the range extension battery (5) usage.

The range extension battery (5) charging will be done by using a first alternating-to-direct voltage converter (34), which converts typically alternating voltages into direct voltages and currents as required to charge the battery and its cells. The first battery monitoring and balancing subsystem (35), through connections (39), monitors the state of the range extension battery (5) cells and the relevant voltage and temperature of the range extension battery (5), in addition to controlling the charge parameters of the range extension battery (5) according to the output voltage and current of the first alternating-to-direct voltage converter (34). The connections (39) are wire connections to the cells, namely analogue cells, which are configured to measure their voltage and ensure voltage balance.

The first alternating-to-direct voltage converter (34) can be powered through an alternating voltage socket outlet (36), single-phase or three-phase, or to an electric or hybrid vehicle recharge station (44).

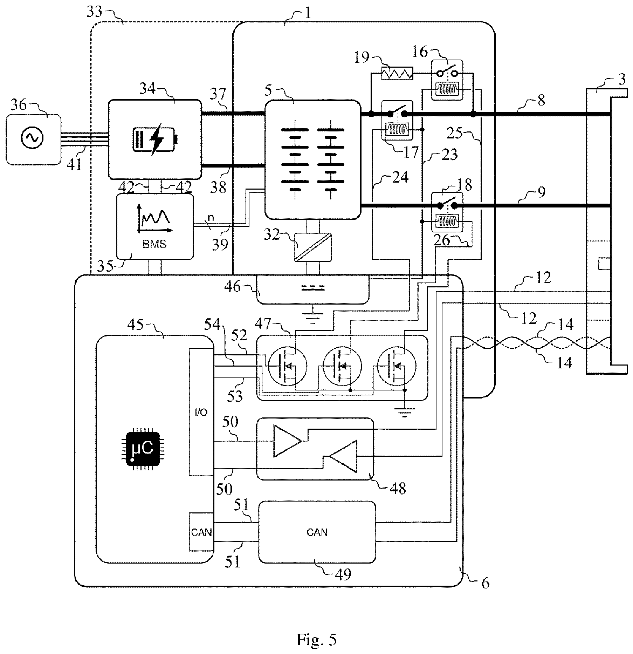

Preferably, as illustrated in figure 5, the first range extension control subsystem (6) comprises a microcontroller (45), a power circuit (46), a power circuit for contactors control (47), a signal adaptation circuit for verifying electrical connections (48) and a module signal adapter for digital communication circuits (49); wherein
said power circuit for contactors control (47) is connected to the first power contactor for positive high voltage (17) through the first control connection (24), to the first power contactor for pre-charge (16) through the second control connection (25) and to the first power contactor for negative high voltage (18) through the third control connection (26); and wherein
said power circuit for contactors control (47) is connected to the microcontroller (45) through a control connection of the power contactor for positive high voltage (52), of a control connection of the power contactor for negative high voltage (53) and of a control connection of the power contactor for pre-charge (54); and wherein
said signal adaptation circuit for electrical connections (48) is connected to the microcontroller (45) through connections (50) and to the first electrical connection element (3) through the first electrical contact check connection (12); and wherein said module signal adapter for digital communication circuits (49) is connected to the microcontroller (45) through third digital communications (51) and to the first electrical connection element (3) through the first digital communications bus (14); and wherein
said power circuit (46) is connected to the first power contactor for positive high voltage (17), to the first power contactor for pre-charge (16) and to the first power contactor for negative high voltage (18) through the first electrical supply line for contactors (23).

The power circuit for contactors control (47) includes power transistors which enable the contactors to be activated. MOSFET (Metal Oxide Semiconductor Field Effect Transistor) type transistors are normally used for their efficiency, but other types can be used, as will be understood by a person skilled in the art. A signal adaptation circuit for verifying electrical connections (48) includes signal adapters, which allow impedance and voltage compatibility between the microcontroller's (45) input and output (I/O) port signals and the signals used to detect the presence of the first electrical contact check connection (12).

This way, the first range extension control subsystem (6) may include a power circuit (46); a microcontroller (45), which executes a code including instructions for the execution of the link control programme between the external range extension subsystem (1) and the onboard range extension subsystem (2). The control of the connection between the subsystems (1,2) is through communication between the first range extension control subsystem (6) and the second range extension control subsystem (7), through the connection between the first digital communications bus (14) and the second digital communications bus (15). The microcontroller (45) includes a digital communication network controller system, for example a CAN "Controller Area Network" bus and a data input and output ("I/O") module. The module signal adapter for digital communication circuits (49) also includes a digital communication network controller system, for example a CAN bus.

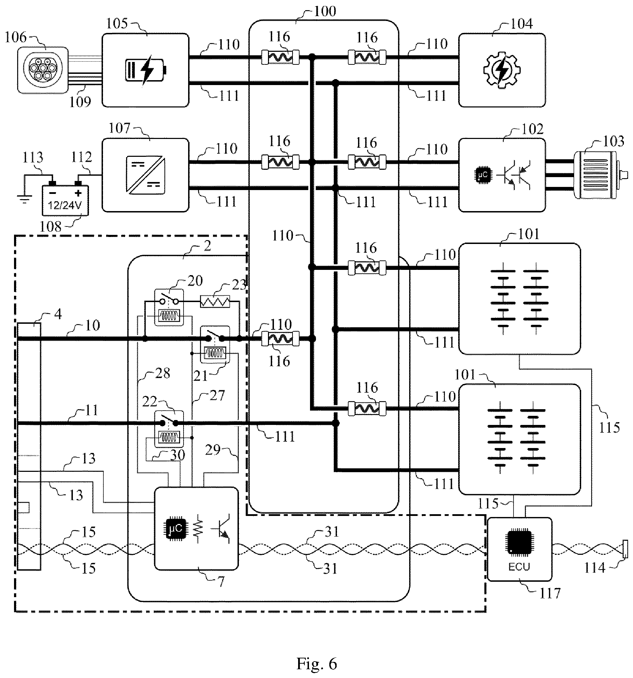

The second range extension control subsystem (7) and the first range extension control subsystem (6) may have similar circuits and components. On the other hand, these control subsystems (6,7) have differences with regard to the connection with the battery monitoring and balancing subsystems, since the first range extension control subsystem (6) communicates with the first battery monitoring and balancing subsystem (35), whereas the second range extension control subsystem (7) is connected to a second battery monitoring and balancing subsystem (117) through the digital communications bus of the vehicle (31), as illustrated in figure 6.

The power distribution module (100) connects the high-voltage connections from the module of high-voltage batteries (101) and distributes to the other components of the electric or hybrid vehicle. In the embodiments illustrated in figure 6, the power distribution module (100) is connected to at least one module of high-voltage batteries (101), to a traction system controller of the vehicle (102) configured to actuate in an electric traction motor of the vehicle (103), to a high-voltage charger of the vehicle (105) and with a converter between high and low voltage of the vehicle (107), wherein said connections are carried out respectively through fourth positive high voltage connections (110) and fourth negative high voltage connections (111). In case of activation of the range extension system according to the invention, the module of high-voltage batteries (101) are disabled through the control action of the second range extension control subsystem (7) on the second battery monitoring and balancing subsystem (117), through the digital communications bus of the vehicle (31), and the subsequent communication of the second battery monitoring and balancing subsystem (117) with the module of high-voltage batteries (101), thus allowing the direct supply of another high-voltage system of the vehicle (104), the traction system controller of the vehicle (102) and the converter between high and low voltage of the vehicle (107), between other components. Regarding the control of the vehicle batteries, preferably, the second battery monitoring and balancing subsystem (117) controls at least one the module of high-voltage batteries (101) through a seventh control connection (115). Additionally, the second battery monitoring and balancing subsystem (117) may also feature a digital communication to the bus of the vehicle (114).

As illustrated in figure 6, the high-voltage charger of the vehicle (105) is connected to a charge socket outlet of the vehicle (106) through a third alternating voltage connection (109), while preserving the possibility of connecting the vehicle with an electric or hybrid vehicle recharge station (44). In other embodiments, the converter between high and low voltage of the vehicle (107) is connected with a low-voltage battery in the vehicle (108), through a positive low voltage connection (112), whereby the low-voltage battery in the vehicle (108) is simultaneously connected with a negative low-voltage connection (113).

In the preferred embodiments of the range extension system of the invention, the connections between the power distribution module (100) and the module of high-voltage batteries (101), the traction system controller of the vehicle (102), the high-voltage charger of the vehicle (105) and the converter between high and low voltage of the vehicle (107) includes at least one high voltage fuse (116), configured for the protection of the respective connections against overvoltage. Even more preferably, said high voltage fuse (116) can be included in the power distribution module (100).

In the embodiments where the rage extension battery (5) operates in parallel with the module of high-voltage batteries (101) of the vehicle, considering similar characteristics and configurations, namely the total voltage of the series of cells and if their operating voltages are similar, the range extension system can work permanently on the electric or hybrid vehicle, maintaining the first electrical connection element (3) and the second electrical connection element (4) connected, and the first power contactor for positive high voltage (17), the first power contactor for negative high voltage (18), the second power contactor for positive high voltage (21) and the second power contactor for negative high voltage (22) permanently activated. In this case, the range extension system of the invention enables the increase of the module of high-voltage batteries (101) capacity in the vehicle and, as a result, their autonomy. In this application the charging of the range extension battery (5) will be done by the high-voltage charger of the vehicle (105).

The range extension system of the invention allows its implementation in dimensions and weight that provides its easy transport and installation in the vehicle, for example in its boot, as can be observed in the implementation method illustrated in figure 7, which presents an embodiment in which the external range extension subsystem (1) is incorporated in a transportable unit including a carrying handle and wheels on its base, where the terminals of the first electrical connection element (3) and the alternating voltage socket outlet (36) are arranged in order to provide the respective connections.

As used in this description, the term "low voltage" comprises a standard voltage of 12V for light vehicles and a standard voltage of 24V for heavy vehicles.

As used in this description, the expression "high voltage" comprises higher voltages than low voltage referring to the battery storing energy, for which no specific standards are defined. The precise value depends on the vehicle power and the number of cells used, the most typical being 48V, 96V, 100V, 300V, 350V, 400V, 600V and 800V, but values are not limited to these examples.

As used in this description, the expressions "around" and "approximately" refer to an interval of values of more or less 10% of the number specified.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B.

In addition, the articles "a" and "an" as used in this application and the appended claims should generally be construed to mean "one or more" unless specified otherwise or clear from the context to be directed to a singular form.

Further, as used herein, the term "exemplary" is intended to mean serving as an illustration or example of something and is not intended to indicate a preference.

As used in this description, the expression "substantially" means that the real value is within around 10% of the desired value, variable, or related limit, particularly within around 5% of the desired value, variable or related limit or particularly within around 1% of the desired value, variable or related limit.

The subject matter described above is provided as an illustration of the present invention and, therefore, cannot be interpreted so as to limit it. The terminology used herein with the purpose of describing preferred embodiments of the present invention, must not be interpreted to limit the invention. As used in the specification, the definite and indefinite articles, in their singular form, aim at the interpretation of also including the plural forms, unless the context of the description indicates, explicitly, the contrary. It will be understood that the expressions "comprise" and "include", when used in this description, specify the presence of the characteristics, the elements, the components, the steps and the related operations, however, they do not exclude the possibility of other characteristics, elements, components, steps and operations also being contemplated.

All the alterations, providing that they do not modify the essential characteristics of the claims that follow, must be considered as being within the scope of protection of the present invention.

### REFERENCE SIGNS LIST

- 1.: an external range extension subsystem
- 2.: an onboard range extension subsystem
- 3.: a first electrical connection element
- 4.: a second electrical connection element
- 5.: a range extension battery
- 6.: a first range extension control subsystem
- 7.: a second range extension control subsystem
- 8.: a first positive high voltage connection
- 9.: a first negative high voltage connection
- 10.: a second positive high voltage connection
- 11.: a second negative high voltage connection
- 12.: a first electrical contact check connection
- 13.: a second electrical contact check connection
- 14.: a first digital communications bus
- 15.: a second digital communications bus
- 16.: a first power contactor for pre-charge
- 17.: a first power contactor for positive high voltage
- 18.: a first power contactor for negative high voltage
- 19.: a pre-charge resistor
- 20.: a second power contactor for pre-charge
- 21.: a second power contactor for positive high voltage
- 22.: a second power contactor for negative high voltage
- 23.: a first electrical supply line for contactors
- 24.: a first control connection
- 25.: a second control connection
- 26.: a third control connection
- 27.: a second electrical supply line for contactors
- 28.: a fifth control connection
- 29.: a fourth control connection
- 30.: a sixth control connection
- 31.: a digital communications bus of the vehicle
- 32.: a high to low voltage converter
- 33.: a range extension battery loading subsystem
- 34.: a first alternating-to-direct voltage converter
- 35.: a first battery monitoring and balancing subsystem
- 36.: an alternating voltage socket outlet
- 37.: a third positive high voltage connection
- 38.: a third negative high voltage connection
- 39.: a connection
- 40.: a first digital communication
- 41.: a first alternating voltage connection
- 42.: a second digital communication
- 43.: a second alternating voltage connection
- 44.: an electric or hybrid vehicle recharge station
- 45.: a microcontroller
- 46.: a power circuit
- 47.: a power circuit for contactors control
- 48.: a signal adaptation circuit for verifying electrical connections
- 49.: a module signal adapter for digital communication circuits
- 50.: a connection
- 51.: a third digital communication
- 52.: a control connection of the power contactor for positive high voltage
- 53.: a control connection of the power contactor for negative high voltage
- 54.: a control connection of the power contactor for pre-charge
- 100.: a power distribution module
- 101.: a module of high-voltage batteries
- 102.: a traction system controller of the vehicle
- 103.: an electric traction motor of the vehicle
- 104.: another high-voltage system of the vehicle
- 105.: a high-voltage charger of the vehicle
- 106.: a charge socket outlet of the vehicle
- 107.: a converter between high and low voltage of the vehicle
- 108.: a low-voltage battery in the vehicle
- 109.: a third alternating voltage connection
- 110.: a fourth positive high voltage connection
- 111.: a fourth negative high voltage connection
- 112.: a positive low voltage connection
- 113.: a negative low voltage connection
- 114.: a digital communication to the bus of the vehicle
- 115.: a seventh control connection
- 116.: a high voltage fuse
- 117.: a second battery monitoring and balancing subsystem
- 200.: a range extension module of the prior art
- 201.: a high voltage battery
- 202.: a converter between direct and alternating voltage of the vehicle
- 203.: a charger
- 204.: a positive high voltage connection
- 205.: a negative high voltage connection
- 206.: a positive high voltage connection
- 207.: a negative high voltage connection
- 208.: an alternating voltage connection
- 209.: a supply of alternating voltage
- 210.: an alternating voltage connection

### Citation List

### Citation List follows:

### Non-Patent Literature

https://www.caradvice.com.au/832274/range-extender-trailer/, retrived on September 15, 2021;
https://chargedevs.com/features/sparkcharge-launches-a-portable-and-scalable-dc-fast-charging-unitA retrived on September 15, 2021.

## Claims

1. A range extension system of electric energy storage and supply devices for electric or hybrid vehicles **characterized by** comprising:
an external range extension subsystem (1), which includes at least one range extension battery (5) and a first range extension control subsystem (6); and
an onboard range extension subsystem (2) which includes a power distribution module (100) and a second range extension control subsystem (7); and
a first electrical connection element (3), which includes a first positive high voltage connection (8), a first negative high voltage connection (9), a first electrical contact check connection (12) and a first digital communications bus (14); and
a second electrical connection element (4), which includes a second positive high voltage connection (10), a second negative high voltage connection (11), a second electrical contact check connection (13) and a second digital communications bus (15); wherein
the external range extension subsystem (1) is configured to connect to the onboard range extension subsystem (2) through the connection of the first electrical connection element (3) with the second electrical connection element (4), and said connection is established through contact between the first positive high voltage connection (8) and the second positive high voltage connection (10), between the first negative high voltage connection (9) and the second negative high voltage connection (11), between the first electrical contact check connection (12) and the second electrical contact check connection (13) and between the first digital communications bus (14) and the second digital communications bus (15); and wherein
the first positive high voltage connection (8) and the first negative high voltage connection (9) are additionally linked to at least one range extension battery (5), and the first positive high voltage connection (8) is contacted to a first power contactor for pre-charge (16) and to a first power contactor for positive high voltage (17) and the first negative high voltage connection (9) is contacted to a first power contactor for negative high voltage (18); and wherein
the first electrical contact check connection (12) and the first digital communications bus (14) are additionally contacted to the first range extension control subsystem (6); and wherein
the second positive high voltage connection (10) and the second negative high voltage connection (11) are additionally contacted to the power distribution module (100), and the second positive high voltage connection (10) is contacted to a second power contactor for pre-charge (20) and to a second power contactor for positive high voltage (21) and the second negative high voltage connection (11) is contacted to a second power contactor for negative high voltage (22); and wherein
the second electrical contact check connection (13) and the second digital communications bus (15) are additionally contacted to the second range extension control subsystem (7).

2. The range extension system of electric energy storage and supply devices for electric or hybrid vehicles according to claim 1, **characterized in that** the first positive high voltage connection (8) includes the first power contactor for pre-charge (16), the first power contactor for positive high voltage (17) and a first pre-charge resistor (19), which are arranged between the range extension battery (5) and the first electrical connection element (3); wherein
the first power contactor for pre-charge (16) and the first pre-charge resistor (19) are arranged in series with each other and in parallel in relation to the first power contactor for positive high voltage (17); and wherein
the first power contactor for pre-charge (16) and the first power contactor for positive high voltage (17) are electrically powered from the first range extension control subsystem (6) through a first electrical supply line for contactors (23); and wherein
the first power contactor for positive high voltage (17) is controlled by the first range extension control subsystem (6) through a first control connection (24); and wherein
the first power contactor for pre-charge (16) is controlled by the first range extension control subsystem (6) through a second control connection (25).

3. The range extension system of electric energy storage and supply devices for electric or hybrid vehicles according to any one of the preceding claims, **characterized in that** the first negative high voltage connection (9) includes the first power contactor for negative high voltage (18), which is arranged between the range extension battery (5) and the first electrical connection element (3); wherein
the first power contactor for negative high voltage (18) is electrically powered from the first range extension control subsystem (6) through a first electrical supply line for contactors (23); and wherein
the first power contactor for negative high voltage (18) is controlled by the first range extension control subsystem (6) through a third control connection (26).

4. The range extension system of electric energy storage and supply devices for electric or hybrid vehicles according to any one of the preceding claims, **characterized by** comprising a high to low voltage converter (32), which is linked to at least one range extension battery (5) and to the first range extension control subsystem (6).

5. The range extension system of electric energy storage and supply devices for electric or hybrid vehicles according to any one of the preceding claims, **characterized in that** the second positive high voltage connection (10) includes the second power contactor for pre-charge (20), the second power contactor for positive high voltage (21) and a second pre-charge resistor (19), which are arranged between the power distribution module (100) and the second electrical connection element (4); wherein
the second power contactor for pre-charge (20) and the second pre-charge resistor (19) are arranged in series with each other and in parallel in relation to the second power contactor for positive high voltage (21); and wherein
the second power contactor for pre-charge (20) and the second power contactor for positive high voltage (21) are electrically powered from the second range extension control subsystem (7) through a second electrical supply line for contactors (27); and wherein
the second power contactor for positive high voltage (21) is controlled by the second range extension control subsystem (7) through a fourth control connection (29); and wherein
the second power contactor for pre-charge (20) is controlled by the second range extension control subsystem (7) through a fifth control connection (28).

6. The range extension system of electric energy storage and supply devices for electric or hybrid vehicles according to any one of the preceding claims, **characterized in that** the second negative high voltage connection (11) includes the second power contactor for negative high voltage (22), which is arranged between the power distribution module (100) and the second electrical connection element (4); wherein
the second power contactor for negative high voltage (22) is electrically powered from the second range extension control subsystem (7) through a second electrical supply line for contactors (27); and wherein
the second power contactor for negative high voltage (22) is controlled by the second range extension control subsystem (7) through a sixth control connection (30).

7. The range extension system of electric energy storage and supply devices for electric or hybrid vehicles according to any one of the preceding claims, **characterized in that** the second range extension control subsystem (7) is contacted to a digital communications bus of the vehicle (31).

8. The range extension system of electric energy storage and supply devices for electric or hybrid vehicles according to any one of the preceding claims, **characterized by** comprising a range extension battery loading subsystem (33), which includes a first alternating-to-direct voltage converter (34) and a first battery monitoring and balancing subsystem (35); wherein
said first alternating-to-direct voltage converter (34) is configured to connect to at least one range extension battery (5) through a third positive high voltage connection (37) and a third negative high voltage connection (38); and wherein
said first alternating-to-direct voltage converter (34) is configured to connect to an alternating voltage socket outlet (36), through a first alternating voltage connection (41), or with an electric or hybrid vehicle recharge station (44), through a second alternating voltage connection (43); and wherein
said first battery monitoring and balancing subsystem (35) is configured to connect to at least one range extension battery (5) through a connection (39), to the first range extension control subsystem (6) through a first digital communication (40) and to the first alternating-to-direct voltage converter (34) through a second digital communication (42).

9. The range extension system of electric energy storage and supply devices for electric or hybrid vehicles according to any one of claims 2 to 8, **characterized in that** the first range extension control subsystem (6) comprises a microcontroller (45), a power circuit (46), a power circuit for contactors control (47), a signal adaptation circuit for verifying electrical connections (48) and a module signal adapter for digital communication circuits (49); wherein
said power circuit for contactors control (47) is connected to the first power contactor for positive high voltage (17) through the first control connection (24), to the first power contactor for pre-charge (16) through the second control connection (25) and to the first power contactor for negative high voltage (18) through the third control connection (26); and wherein
said power circuit for contactors control (47) is connected to the microcontroller (45) through a control connection of the power contactor for positive high voltage (52), of a control connection of the power contactor for negative high voltage (53) and of a control connection of the power contactor for pre-charge (54); and wherein
said signal adaptation circuit for electrical connections (48) is connected to the microcontroller (45) through connections (50) and to the first electrical connection element (3) through the first electrical contact check connection (12); and wherein
said module signal adapter for digital communication circuits (49) is connected to the microcontroller (45) through third digital communications (51) and to the first electrical connection element (3) through the first digital communications bus (14); and wherein
said power circuit (46) is connected to the first power contactor for positive high voltage (17), to the first power contactor for pre-charge (16) and to the first power contactor for negative high voltage (18) through the first electrical supply line for contactors (23).

10. The range extension system of electric energy storage and supply devices for electric or hybrid vehicles according to any one of the preceding claims, **characterized in that** the power distribution module (100) is connected to at least one module of high-voltage batteries (101), to a traction system controller of the vehicle (102) configured to actuate in an electric traction motor of the vehicle (103), to a high-voltage charger of the vehicle (105) and with a converter between high and low voltage of the vehicle (107), wherein said connections are carried out respectively through fourth positive high voltage connections (110) and fourth negative high voltage connections (111).

11. The range extension system of electric energy storage and supply devices for electric or hybrid vehicles according to the preceding claim, **characterized in that** the high-voltage charger of the vehicle (105) is connected to a charge socket outlet of the vehicle (106) through a third alternating voltage connection (109).

12. The range extension system of electric energy storage and supply devices for electric or hybrid vehicles according to either one of claims 10 and 11, **characterized in that** the converter between high and low voltage of the vehicle (107) is connected with a low-voltage battery in the vehicle (108).

13. The range extension system of electric energy storage and supply devices for electric or hybrid vehicles according to any one of claims 10 to 12, **characterized in that** the second range extension control subsystem (7) is connected to a second battery monitoring and balancing subsystem (117) through the digital communications bus of the vehicle (31).

14. The range extension system of electric energy storage and supply devices for electric or hybrid vehicles according to the preceding claim, **characterized in that** the second battery monitoring and balancing subsystem (117) controls at least one module of high-voltage batteries (101) through a seventh control connection (115).
